# EUROPÄISCHE PATENTSCHRIFT

(11) **EP 3 910 547 B1**
(45) Veröffentlichungstag und Bekanntmachung des Hinweises auf die Patenterteilung: **07.06.2023**
(21) Anmeldenummer: 21168976.5
(22) Anmeldetag: 16.04.2021
(51) Int. Cl.: G06V 10/25, G06V 20/64

(54) **ERFASSUNG VON BEWEGTEN OBJEKTEN**
DETECTION OF MOVING OBJECTS
DÉTECTION DES OBJETS MOBILES

(30) Priorität: 15.05.2020 DE 102020113183
(43) Veröffentlichungstag der Anmeldung: 17.11.2021
(73) Patentinhaber: SICK AG, 79183 Waldkirch (DE)
(72) Erfinder: Müller, Dr. Romain, 79252 Stegen (DE); Strohmeier, Dr. Dirk, 79312 Emmendingen (DE)

(56) Entgegenhaltungen:
- DE-B3-102008 020 416
- OMAR ARIF ET AL: "Tracking and Classifying Objects on a Conveyor Belt Using Time-of-Flight Camera", 35TH INTERNATIONAL SYMPOSIUM ON AUTOMATION AND ROBOTICS IN CONSTRUCTION (ISARC 2018), 20. Juni 2010 (2010-06-20), XP055729055, ISSN: 2413-5844, DOI: 10.22260/ISARC2010/0022
- PARK HO-MIN ET AL: "Box-Scan: An Efficient and Effective Algorithm for Box Dimension Measurement in Conveyor Systems using a Single RGB-D Camera", PROCEEDINGS OF THE 7TH IIAE INTERNATIONAL CONFERENCE ON INDUSTRIAL APPLICATION ENGINEERING 2019, 1. Januar 2019 (2019-01-01), Seiten 160-167, XP055842835, DOI: 10.12792/iciae2019.032 ISBN: 978-4-907220-18-1

## Beschreibung

Die Erfindung betrifft eine Kamera und ein Verfahren zur Erfassung von in einer Bewegungsrichtung bewegten Objekten nach dem Oberbegriff von Anspruch 1 beziehungsweise 12.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die Kamera ist vielfach Teil eines komplexen Sensorsystems. Beispielsweise ist es bei Lesetunneln an Förderbändern üblich, die Geometrie der geförderten Objekte vorab mit einem gesonderten Laserscanner zu vermessen und daraus Fokusinformationen, Auslösezeitpunkte, Bildbereiche mit Objekten und dergleichen zu bestimmen. Das erfordert zahlreiche manuelle Einrichtungsschritte für den vorgelagerten Laserscanner und die korrekte Verarbeitung von dessen Eingangsdaten in der Kamera.

In der DE 10 2018 105 301 A1 wird eine Kamera vorgestellt, die einen integrierten Abstandssensor aufweist. Damit können auch mehrere Abstände in Ortsauflösung gemessen werden, aber bisher ist das Auslesen der mehreren Messzonen des Abstandssensors nur sequentiell möglich. Daher lässt sich ein Höhenprofil nicht eindeutig rekonstruieren, beziehungsweise nur mit Aufwand und in Kenntnis der Fördergeschwindigkeit der Objekte. Der Abstandssensor ist in DE 10 2018 105 301 A1 eine Quelle für zusätzliche Information, die in der Kamera genutzt wird. Eine Konfiguration des Abstandssensors selbst findet aber nicht statt.

Die DE 10 2017 129 609 A1 offenbart eine 3D-Kamera, die ihren Erfassungsbereich in säulenartige Zellen auf einem zweidimensionalen Raster unterteilt. Bewegungen werden durch statistische Auswertung von Erfassungen in diesen Zellen erfasst. Dabei handelt es sich jedoch nicht um eine Kamera mit Abstandssensor zur Bestimmung von Hilfsparametern für die Kamera, sondern die Kamera misst selbst die Abstände mit dem Ziel einer Bewegungsdetektion als eigentliches Messergebnis. Eine Konfiguration anhand dieser Messungen findet nicht statt.

Aus der EP 2 708 914 A1 oder der EP 3 339 887 B1 ist jeweils ein Lichtempfänger bekannt, der Lawinenphotodioden im Geigermodus oder SPADs (Single-Photon Avalanche Diode) aufweist, mit denen Lichtlaufzeiten und somit Abstände bestimmt werden. Dabei können Teilbereiche des Lichtempfängers durch Einstellung der Vorspannung aktiviert und deaktiviert werden. Erneut sind die Abstände das eigentliche Ziel der Messung und nicht Hilfsparameter einer Kamera.

Die Arbeit Arif, Omar, et al. "Tracking and classifying objects on a conveyor belt using time-of-flight camera." Proceedings of the 27th ISARC (2010): 203-212 befasst sich mit der Erfassung von Objekten für einen Roboter mittels eines Lichtlaufzeitsensors.

Es ist daher Aufgabe der Erfindung, die Handhabung einer Kamera mit Abstandssensor zu erleichtern.

Diese Aufgabe wird durch eine Kamera und ein Verfahren zur Erfassung von in einer Bewegungsrichtung bewegten Objekten nach Anspruch 1 beziehungsweise 12 gelöst. Mit einem Bildsensor werden Bilddaten der Objekte aufgenommen. Aufgrund einer Relativbewegung zwischen den Objekten und der Kamera bewegen sich die Objekte in beziehungsweise durch das Kamerasichtfeld. Die Kamera umfasst zusätzlich zu dem Bildsensor einen optoelektronischen Abstandssensor nach dem Prinzip des Lichtlaufzeitverfahrens mit mehreren Messzonen. Eine Messzone weist vorzugsweise ein oder mehrere Lichtempfangselemente auf. Jede Messzone ist in der Lage, einen Abstandswert zu messen, so dass insgesamt eine lateral ortsaufgelöste Messung mehrerer Abstandswerte erfolgt. Der Abstandssensor weist ein Abstandsmessungssichtfeld auf, das von dem Kamerasichtfeld zu unterscheiden ist. Eine Steuer- und Auswertungseinheit hat Zugriff auf die Bilddaten des Bildsensors und den Abstandssensor.

Die Erfindung geht von dem Grundgedanken aus, eine automatische Konfiguration des Abstandssensors zu ermöglichen. Dabei soll ein interessierender Bereich (ROI, region of interest) für den Abstandssensor innerhalb des Abstandsmessungssichtfeldes festgelegt werden. Es sei eigens betont, dass es sich um eine Konfiguration und einen interessierenden Bereich des Abstandssensors und nicht der Kamera selbst handelt. Es wird ein Objektereich bestimmt, in dem sich tatsächlich Objekte bewegen, denn nur das liefert relevante Informationen. Dies betrifft insbesondere eine passende Begrenzung quer zur Bewegungsrichtung, wobei auch längs der Bewegungsrichtung vorzugsweise eine Beschränkung erfolgt, mit denen die kommenden Objekte rechtzeitig vermessen werden.

Der interessierende Bereich wird anhand des Objektbereichs definiert, insbesondere durch Auswahl bestimmter Messzonen. Das kann bedeuten, den interessierenden Bereich gerade auf den Objektbereich festzulegen, aber es sind auch Anpassungen möglich, mit denen noch Teilbereiche hinzukommen oder wegfallen. Um den Objektbereich zu finden, wird das Abstandsmessungssichtfeld für eine gewisse Konfigurationszeit beobachtet. Die dabei gemessenen Abstandswerte beziehungsweise deren Änderungen werden ausgewertet. Die Konfigurationszeit ist beispielsweise vorgegeben oder endet, wenn genügend Abstandswerte erfasst sind. Die Konfigurationszeit ist dem eigentlichen Betrieb vorgelagert oder überlappt damit, etwa indem der Abstandssensor zunächst mit seinem vollen Abstandsmessungssichtfeld arbeitet und dies dann später in einem Schritt oder nach und nach auf einen optimalen interessierenden Bereich einschränkt.

Die Erfindung hat den Vorteil, dass eine mühsame manuelle Einstellung des Abstandssensors durch einen automatischen Ablauf ersetzt wird. Der Abstandssensor wird ohne zusätzlichen Aufwand für die gegebene Ausrichtung der Kamera und die vorhandene Umgebung angepasst, und dabei werden verlässlich sehr gute oder gar optimale Ergebnisse erreicht, die nicht von der Erfahrung des Einrichters abhängen. Die Kamera kann dementsprechend situationsangepasst entsprechend der dann gemessenen Abstandsmesswerte reagieren, beispielsweise eine Aufnahme auslösen, einen Fokus oder eine Beleuchtung einstellen.

Der Abstandssensor ist bevorzugt in die Kamera integriert. Das ergibt einen besonders kompakten Aufbau mit einfachem internem Datenzugriff und deutlich vereinfachter Montage. Außerdem ist damit die gegenseitige Ausrichtung von Abstandssensor und Kamera bekannt und festgelegt.

Die Messzonen sind vorzugsweise parallel auslesbar. Dadurch können praktisch gleichzeitig mehrere lateral ortsaufgelöste Abstandswerte erfasst werden, so dass sich ein konsistentes Höhenprofil ergibt. Bei herkömmlichem sequentiellem Auslesen müssen dafür die Abstandswerte noch mit den verschiedenen Auslesezeitpunkten und der Relativbewegung verrechnet werden.

Die Steuer-und Auswertungseinheit ist bevorzugt dafür ausgebildet, über eine Variationszeit ein statistisches Maß für Änderungen der Abstandswerte einer jeweiligen Messzone zu bestimmen. Die Variationszeit kann zur Vereinfachung und Verkürzung der Konfigurationszeit entsprechen oder damit überlappen, ist aber nicht zwingend daran gebunden. Das statistische Maß ist insbesondere eine Varianz oder Standardabweichung der Abstandswerte je Messzone. Liegt das statistische Maß über einer Toleranzschwelle, so haben sich die Abstandswerte über die Variationszeit mehr als rauschbedingt verändert. Deshalb kann angenommen werden, dass sich mindestens ein Objekt durch die entsprechende Messzone bewegt hat, die somit zum Objektbereich gehört. Diese Messung und Auswertung wird vorzugsweise für alle Messzonen durchgeführt.

Die Steuer- und Auswertungseinheit ist bevorzugt dafür ausgebildet, über eine Hintergrunderfassungszeit jeweils einen Maximalwert der Abstandswerte einer jeweiligen Messzone zu bestimmen. Die derart bestimmten Maximalwerte ergeben ein Höhenprofil des Hintergrundes ohne bewegte Objekte. Denn Objekte sind wegen der Relativbewegung als temporär zu betrachten, sie verkürzen die gemessenen Abstände im Vergleich zum Hintergrund so lange, wie sie sich im Abstandsmessungssichtfeld bewegen. Wenn die Hintergrunderfassungszeit also unter Berücksichtigung der Objektgrößen und der Dichte des Objektstroms lang genug ist, wird eine Messzone irgendwann auch eine Messung ohne Objekt durchführen und den entsprechenden Maximalwert liefern. Die Hintergrunderfassungszeit kann mit der Konfigurationszeit beziehungsweise der Variationszeit übereinstimmen oder überlappen, muss dies aber funktionell nicht. Auch der Hintergrund wird vorzugsweise für alle Messzonen bestimmt.

Die Steuer- und Auswertungseinheit ist bevorzugt dafür ausgebildet, den interessierenden Bereich anhand der Maximalwerte und einer erwarteten Hintergrundgeometrie anzupassen, wobei insbesondere die Anpassung eine Richtung quer zu der Bewegungsrichtung betrifft. In derartigen Ausführungsformen ist der interessierende Bereich nicht allein durch den Objektbereich bestimmt, sondern wird noch weiter angepasst. Das basiert auf einer Erwartungshaltung an den relevanten Hintergrund, insbesondere dass die Objekte auf einem ebenen Untergrund bewegt werden, wie im Falle eines Förderbandes.

Der interessierende Bereich kann durch die Anpassung verkleinert werden. Das ist beispielsweise vorteilhaft, wenn sich die Objekte zwischen seitlichen Aufbauten bewegen. Dann kann während der Konfiguration eine Messzone ein hohes Objekt noch unter relativ flachem Winkel getroffen haben, obwohl diese Messzone eigentlich nur die seitlichen Aufbauten erfasst, wenn kein Objekt vorhanden ist. Solche Messzonen sollen bevorzugt nicht zum interessierenden Bereich gehören, und das kann erkannt werden, weil der Maximalwert dieser Messzone nicht zu der Annahme einer flachen Hintergrundgeometrie passt.

Umgekehrt kann der interessierende Bereich durch die Anpassung auch vergrößert werden. Damit werden solche Messzonen noch einbezogen, in denen sich während der Konfigurationszeit kein Objekt bewegt hat, obwohl die Messzone eigentlich noch einen relevanten Bereich erfasst, beispielsweise einen Rand eines Förderbandes. Der interessierende Bereich wird hier noch ausgedehnt, soweit die Maximalwerte der erwarteten Hintergrundgeometrie entsprechen, hier dem flachen Förderband. Die Bewertung für die Anpassungen, sowohl für eine Verkleinerung wie eine Vergrößerung, erfolgt vorzugsweise mit einer anwendungsspezifischen Toleranzschwelle. Die Anpassung betrifft vorzugsweise die Querrichtung zu der Bewertungsrichtung. Nur hier kann es seitliche Aufbauten geben, und in Bewegungsrichtung durchläuft ein Objekt ohnehin sämtliche dort angeordneten Messzonen.

Die Steuer- und Auswertungseinheit ist bevorzugt dafür ausgebildet, den interessierenden Bereich längs der Bewegungsrichtung auf einen zu den bewegten Objekten hin gerichteten Eintrittsbereich zu beschränken. Es ist vorteilhaft, die Abstandswerte so frühzeitig wie möglich zu gewinnen, um der Kamera Zeit zu geben, sich daran rechtzeitig vor einer Aufnahme anzupassen. Das gelingt mit den Messzonen, die ein Objekt zuerst erfassen, beispielsweise eine gegen die Bewegungsrichtung dem Kamerasichtfeld möglichst weit vorgelagerte Messzone oder Spalte von Messzonen. In Bewegungsrichtung nachgelagerte Messzonen liefern, jedenfalls bei ausreichend schneller Messfrequenz, ohnehin nur redundante Abstandswerte. Für die Funktion wäre es nicht schädlich, wenn zusätzliche Messzonen und nicht nur diejenigen des Eintrittsbereichs Abstandswerte messen, aber das erhöht die anfallende Datenmenge und die Komplexität der Auswertung.

Der Abstandssensor weist bevorzugt eine Vielzahl von im Geiger-Modus betreibbaren Lawinenphotodioden auf, und die Steuer- und Auswertungseinheit ist dafür ausgebildet, den interessierenden Bereich durch selektive Aktivierung des Geiger-Modus in dem interessierenden Bereich entsprechenden Lawinenphotodioden einzustellen. Der interessierende Bereich oder die Auswahl der Messzonen ist hier nicht nur eine Softwareeinstellung, sondern eine Aktivierung direkt im Frontend. Nur die aktiven Lawinenphotodioden oder Messzonen liefern überhaupt Abstandswerte, so dass keine besondere Filterung notwendig ist und auch die Leistungsaufnahme des Abstandssensors reduziert werden kann. Lawinenphotodiodenelemente im Geiger-Modus lassen sich besonders einfach dadurch aktivieren und deaktivieren, dass eine Vorspannung über oder unter der Durchbruchspannung angelegt wird.

Das Abstandsmessungssichtfeld ragt bevorzugt über das Kamerasichtfeld hinaus, insbesondere gegen die Bewegungsrichtung. Zumindest in der relevanten Richtung, aus der die Objekte kommen, ist damit das Abstandsmessungssichtfeld effektiv größer als das Kamerasichtfeld. Das erleichtert es, rechtzeitig die relevanten Abstandswerte für das Einstellen der Kamera zu erfassen. Vorzugsweise ist das Abstandsmessungssichtfeld zumindest beidseitig längs der Bewegungsrichtung oder sogar auch in Querrichtung größer als das Kamerasichtfeld. Dann ist keine Montagerichtung der Kamera vorgegeben, und es besteht im Nachhinein eine freie Auswahl für die Konfiguration des interessierenden Bereichs in alle Richtungen je nach Montage und Umgebung.

Die Steuer- und Auswertungseinheit ist bevorzugt dafür ausgebildet, Codeinhalte von mit den Objekten aufgenommenen Codes auszulesen. Damit wird die Kamera zu einem kamerabasierten Codeleser für Barcodes und/oder 2D-Codes nach diversen Standards, gegebenenfalls auch für eine Texterkennung (OCR, Optical Character Reading).

Die Kamera ist bevorzugt stationär an einer Fördereinrichtung montiert, welche die Objekte in Bewegungsrichtung fördert. Dies ist eine sehr häufige industrielle Anwendung einer Kamera, in der sich die Objekte in Relativbewegung dazu befinden. Es gibt einen bekannten, meist flachen Hintergrund in festem Abstand in Form eines Förderbandes oder zumindest von Schalen oder Behältern sowie einen gleichmäßigen Objektstrom effektiv in nur einer Dimension.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit einem optoelektronischen Abstandssensor;
- Fig. 2: eine dreidimensionale Ansicht einer beispielhaften Anwendung der Kamera in Montage an einem Förderband;
- Fig. 3: eine schematische Schnittansicht der Kamera sowie der jeweiligen Sichtfelder von Kamera und Abstandssensor;
- Fig. 4: eine beispielhafte Darstellung einer Kamera mit angepasstem Sichtfeld des Abstandssensors über einem Förderband mit seitlichen Aufbauten; und
- Fig. 5: eine Darstellung der gemessenen Abstandswerte über die Breite eines Förderbandes sowie des angepassten Sichtfeldes des Abstandssensors in der Beispielsituation der Figur 4.

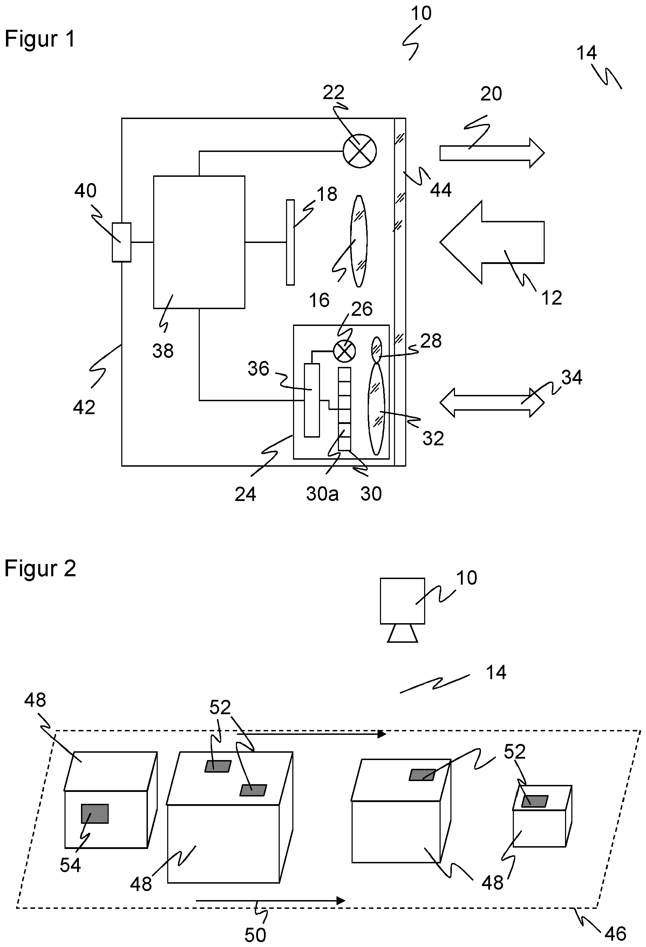

Figur 1 zeigt eine schematische Schnittdarstellung einer Kamera 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert.

Um den Erfassungsbereich 14 während einer Aufnahme der Kamera 10 mit Sendelicht 20 auszuleuchten, umfasst die Kamera 10 eine optionale Beleuchtungseinheit 22, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 22 wie deren Farbe, Intensität und Richtung anzupassen.

Zusätzlich zu dem eigentlichen Bildsensor 18 zur Erfassung von Bilddaten weist die Kamera 10 einen optoelektronischen Abstandssensor 24 auf, der mit einem Lichtlaufzeitverfahren (ToF, Time of Flight) Abstände zu Objekten in dem Erfassungsbereich 14 misst. Der Abstandssensor 24 umfasst einen TOF-Lichtsender 26 mit TOF-Sendeoptik 28 sowie einen TOF-Lichtempfänger 30 mit TOF-Empfangsoptik 32. Damit wird ein TOF-Lichtsignal 34 ausgesandt und wieder empfangen. Eine Lichtlaufzeitmesseinheit 36 bestimmt die Laufzeit des TOF-Lichtsignals 34 und daraus den Abstand zu einem Objekt, an dem das TOF-Lichtsignal 34 zurückgeworfen wurde.

Der TOF-Lichtempfänger 30 weist mehrere Lichtempfangselemente 30a auf. Die Lichtempfangselemente 30a bilden einzeln oder in kleineren Gruppen Messzonen, mit denen jeweils ein Abstandswert bestimmt wird. Es wird deshalb kein einzelner Abstandswert erfasst, sondern die Abstandswerte sind ortsaufgelöst und können zu einem Höhenprofil zusammengesetzt werden. Die Messzonen sind vorzugsweise parallel auslesbar, damit bei einer Relativbewegung zwischen Kamera 10 und erfasstem Objekt ein konsistentes Höhenprofil erzeugt wird. Die Anzahl der Messzonen des TOF-Lichtempfängers 30 kann vergleichsweise gering bleiben, mit beispielsweise einigen zehn, hundert oder tausend Messzonen, weit entfernt von üblichen Megapixelauflösungen des Bildsensors 18.

Der Aufbau des Abstandssensors 24 ist rein beispielhaft. Die optoelektronische Entfernungsmessung mittels Lichtlaufzeitverfahren ist bekannt und wird daher nicht im Einzelnen erläutert. Zwei beispielhafte Messverfahren sind Photomischdetektion mit einem periodisch modulierten TOF-Lichtsignal 34 und Pulslaufzeitmessung mit einem pulsmodulierten TOF-Lichtsignal 34. Dabei gibt es auch hochintegrierte Lösungen, in denen der TOF-Lichtempfänger 30 mit der Lichtlaufzeitmesseinheit 36 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 30, der als Matrix von SPAD-Lichtempfangselementen 30a aufgebaut ist (Single-Photon Avalanche Diode). Messzonen aus SPAD-Lichtempfangselementen 30a können gezielt deaktiviert und aktiviert werden, indem die Vorspannung unter oder über die Durchbruchspannung eingestellt wird. Dadurch kann ein aktiver Bereich des Abstandssensors 24 eingestellt werden. Die TOF-Optiken 28, 32 sind nur symbolhaft als jeweilige Einzellinsen stellvertretend für beliebige Optiken wie beispielsweise ein Mikrolinsenfeld gezeigt.

Eine Steuer- und Auswertungseinheit 38 ist mit der Beleuchtungseinheit 22, dem Bildsensor 18 und dem Abstandssensor 38 verbunden und für die Steuerungs-, Auswertungs- und sonstigen Koordinierungsaufgaben in der Kamera 10 zuständig. Sie liest also Bilddaten des Bildsensors 18 aus, um sie zu speichern beziehungsweise an einer Schnittstelle 40 auszugeben. Die Abstandswerte des Abstandssensors 24 nutzt die Steuer- und Auswertungseinheit 38 je nach Ausführungsform für verschiedene Zwecke, etwa um Kameraparameter zu bestimmen oder einzustellen, um Kamerafunktionen auszulösen oder um Bilddaten auszuwerten, worunter auch Vorverarbeitungen für eine eigentliche Auswertung in der Kamera 10 oder einem übergeordneten System fallen. Vorzugsweise ist die Steuer- und Auswertungseinheit 38 in der Lage, Codebereiche in den Bilddaten aufzufinden und zu decodieren, womit die Kamera 10 zu einem kamerabasierten Codeleser wird.

Die Kamera 10 wird durch ein Gehäuse 42 geschützt, das im vorderen Bereich, wo das Empfangslicht 12 einfällt, durch eine Frontscheibe 44 abgeschlossen ist.

Figur 2 zeigt eine mögliche Anwendung der Kamera 10 in Montage an einem Förderband 46. Die Kamera 10 wird hier und im Folgenden nur noch als ein einziges Symbol und nicht mehr mit ihrem bereits anhand der Figur 1 erläuterten Aufbau gezeigt. Das Förderband 46 fördert Objekte 48, wie durch eine Bewegungsrichtung 50 mit einem Pfeil angedeutet, durch den Erfassungsbereich 14 der Kamera 10. Die Objekte 48 können an ihren Außenflächen Codebereiche 52 tragen. Aufgabe der Kamera 10 ist, Eigenschaften der Objekte 48 zu erfassen und in einem bevorzugten Einsatz als Codeleser die Codebereiche 52 zu erkennen, die dort angebrachten Codes auszulesen, zu dekodieren und dem jeweils zugehörigen Objekt 48 zuzuordnen. Um auch Objektseiten und insbesondere seitlich angebrachte Codebereiche 54 zu erfassen, werden vorzugsweise zusätzliche, nicht dargestellte Kameras 10 aus unterschiedlicher Perspektive eingesetzt.

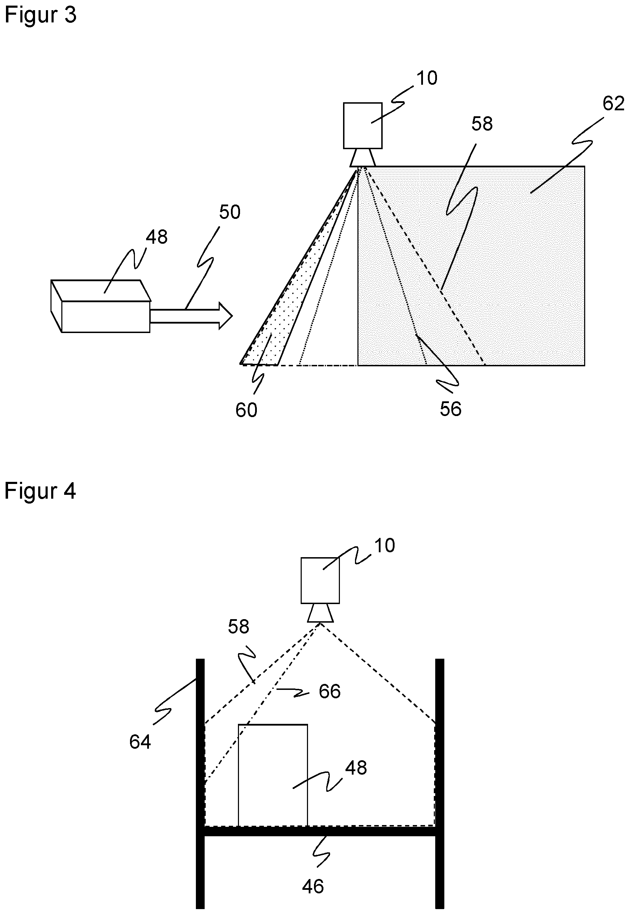

Figur 3 zeigt nochmals eine Kamera 10 in einer Schnittansicht zur Erläuterung der verschiedenen Sichtfelder (FOV, Field of View). Der Erfassungsbereich 14 wird hier differenziert in ein Kamerasichtfeld 56 der eigentlichen Kamera 10 beziehungsweise von deren Bildsensor 18 mit gepunkteten Linien und ein Abstandsmessungssichtfeld 58 des Abstandssensors 24 mit gestrichelter Linie.

Erfindungsgemäß ist die Kamera 10 in der Lage, einen interessierenden Bereich 60 für den Abstandssensor 24 als Teilbereich des Abstandsmessungssichtfeldes 58 automatisch einzustellen. Dafür ist es vorteilhaft, wenn das Abstandsmessungssichtfeld 58 zumindest entgegen der Bewegungsrichtung 50 entsprechend den ankommenden Objekten 48 größer ist als das Kamerasichtfeld 56. Um die Montagerichtung der Kamera 10 nicht festzulegen, kann ein insgesamt größeres Abstandsmessungssichtfeld 58 gewählt werden.

Der Abstandssensors 24 erfasst Objekte 48 in dem interessierenden Bereich 60 frühzeitig, um der Kamera 10 Zeit zu geben, sich entsprechend der Abstandswerte umzustellen, ehe das Objekt 48 eine Aufnahmeposition beispielsweise in der Mitte des Kamerasichtfeldes 56 erreicht hat. Dagegen ist ein von der Aufnahmeposition abgewandter Bereich 62 für die Abstandsmessung nicht mehr interessant, jedenfalls nicht, soweit es Einstellungen der Kamera 10 betrifft, da solche Messungen zu spät kommen. Je nach Aufnahmeposition, Messfrequenz des Abstandssensors 24 und Dauer für abstandsabhängige Umstellungen der Kamera 10 kann der Bereich 62 schon früher beginnen, d.h. in Figur 3 nach links versetzt sein. Man könnte den Bereich 62 als Vergangenheit und den Bereich links davon als Zukunft bezeichnen, da hier jeweils Objekte 48 schon die Aufnahmeposition verlassen haben beziehungsweise sie erst noch erreichen werden.

Eine ganz grobe Wahl des interessierenden Bereichs 60 könnte demnach lediglich den Bereich 62 ausschließen. Der interessierende Bereich 60 wird aber vorzugsweise genauer eingestellt. Einerseits geschieht dies längs der Bewegungsrichtung 50 mit Einschränkung auf einen frühesten Eintrittsbereich der Objekte 48, wie auch in Figur 3 gezeigt. Zusätzlich kann eine Einstellung des interessierenden Bereichs 60 quer zur Bewegungsrichtung 50 erfolgen, um beispielsweise das Förderband 46 einerseits vollständig und andererseits keine Seitenbereiche jenseits des Förderbandes 46 zu erfassen. Ein genau eingestellter interessierender Bereich 60 reduziert die Datenmenge und erforderliche Bandbreite und vereinfacht damit auch die Auswertung. Zudem ist denkbar, die Messfrequenz des Abstandssensors 24 zu erhöhen, wenn sich dessen Arbeitsbereich auf weniger Messzonen reduziert. Wie schon oben erwähnt, wird der interessierende Bereich 60 vorzugsweise durch gezieltes Aktivieren entsprechender SPAD-Lichtempfangselemente 30a in den zugehörigen Messzonen eingestellt.

Nachfolgend wird ein beispielhafter automatischer Ablauf für die Einstellung des interessierenden Bereichs 60 erläutert. Prinzipiell könnte der interessierende Bereich 60 von Hand eingestellt werden, etwa in einem Konfigurationsmenü der Kamera 10. Erfindungsgemäß soll das aber automatisch geschehen, indem die Kamera 10 beispielsweise auf Knopfdruck eine entsprechende Selbstkalibration startet und damit automatisch den passenden interessierenden Bereich 60 für den Abstandssensor 24 aktiviert.

Die Einstellung des interessierenden Bereichs 60 betrifft die Richtung längs und quer zu der Bewegungsrichtung 50. Längs der Bewegungsrichtung 50 ist, wie zu Figur 3 erläutert, zwischen Vergangenheit und Zukunft zu unterscheiden. Dies erfolgt anhand der Bewegungsrichtung 50 beispielsweise durch Aktivierung derjenigen Messzonen, die am weitesten zu den kommenden Objekten 48 hin ausgerichtet sind, etwa eine erste Spalte von Lichtempfangselementen 30a. Parameter der Bewegung der Objekte 48 wie die Bewegungsrichtung 50 und auch die Geschwindigkeit v des Förderbandes 46 können vorgegeben, von einer angeschlossenen übergeordneten Steuerung mitgeteilt oder gemessen werden. Für eine eigene Messung dieser Parameter wird beispielsweise ein Höhenprofil mindestens eines Objekts 48 verfolgt, etwa indem Abstandswerte zusammen mit einem Zeitstempel erfasst werden.

Die Messwiederholfrequenz des Abstandssensors 24 sollte groß genug sein, um ein Objekt 48 ein- oder besser mehrfach zu erfassen, ehe es sich an die Aufnahmeposition bewegt hat. Formal lässt sich das mit der Messperiode Δt_{TOF} des Abstandssensors 24, dem Abstand D zwischen Eintrittsposition der Objekte 48 in den interessierenden Bereich 60 und Aufnahmeposition und Geschwindigkeit v des Förderbandes 46 als die Bedingung Δt_{TOF} << D/v ausdrücken. Der Abstand D kann in der Situation der Figur 3 über die halbe Ausdehnung des Abstandsmessungssichtfeldes 58 auf Höhe des Förderbandes 46 berechnet werden.

In Richtung quer zu der Bewegungsrichtung 50 soll der interessierende Bereich 60 gerade so eingestellt werden, dass alle Objekte 48 auf dem Förderband 46 und keine sonstigen Objekte erfasst werden. Ein denkbares Kriterium ist, dass dafür gerade die Breite des Förderbandes 46 umfasst sein soll. In einem automatischen Konfigurationsverfahren wird dazu der Objektstrom für eine gewisse Zeitdauer beobachtet. Dies kann eine vorgelagerte Konfigurationsphase sein, es ist aber auch möglich, mit einem schlecht oder gar nicht eingestellten interessierenden Bereich 60 zu starten und während des laufenden Betriebs einen optimalen interessierenden Bereich zu finden.

Durch diese Beobachtung und laufende Messung von Abstandswerten kann einerseits der Hintergrund bestimmt werden, nämlich das Förderband 46 und etwaige noch im Abstandsmessungssichtfeld 58 befindliche seitliche Bereiche daneben. Dazu wird jeweils pro Messzone der maximale Abstandswert bestimmt. Die Objekte 48 werden als transient betrachtet, der Abstandssensor 24 wartet durch die Maximalwertbestimmung sozusagen pro Messzone auf einen geeigneten Augenblick, in dem der Hintergrund zumindest kurzzeitig sichtbar wird.

Zudem wird die Veränderung der Abstandswerte pro Messzone bestimmt, etwa in Form einer Varianz oder Standardabweichung. Es gibt nur in den Messzonen eine signifikante Veränderung, durch die sich ein Objekt 48 bewegt hat. In den sonstigen Messzonen wird stets derselbe Abstand betrachtet. Um eine rauschbedingte Veränderung auszuschlie-ßen, wird vorzugsweise noch eine Rauschschwelle definiert. Die Messzonen mit mehr als rauschbedingter Veränderung werden als Objektbereich selektiert.

Der interessierende Bereich 60 kann mit diesem Objektbereich identifiziert werden. Vorzugsweise erfolgt aber noch eine Anpassung. Es kann zum einen Regionen geben, die zu dem Förderband 46 gehören, durch die sich aber während der Zeit der Beobachtung zufällig nie ein Objekt 48 bewegt hat. Da bekannt ist, dass das Förderband 46 eine Ebene bildet, kann der Objektbereich dorthin erweitert werden, wo anhand des Hintergrundes dieselbe Ebene fortgesetzt ist.

Umgekehrt können insbesondere hohe Objekte 48 von Messzonen erfasst worden sein, die gar nicht mehr auf das Förderband 46 gerichtet sind. Das ist in Figur 4 illustriert. Das Förderband 46 ist hier von seitlichen Aufbauten 64 eingerahmt, wie Stangen oder ähnlichen Störobjekten. Eine Messzone mit Messstrahl 66 hat ein hohes Objekt 48 erfasst und wurde deshalb zunächst dem Objektbereich zugeschlagen. Ohne das Objekt 48 trifft aber der Messstrahl 66 nicht das Förderband 46, sondern die seitlichen Aufbauten 64.

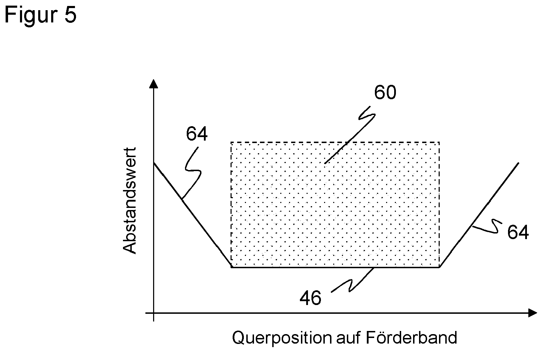

Wie in Figur 5 illustriert, kann dieser Fall anhand der Hintergrundmessung erkannt und die entsprechende Messzone des Messstrahls 66 aus dem interessierenden Bereich 60 ausgeschlossen werden, obwohl sie zunächst Teil des Objektbereichs war. Gezeigt ist der Abstandswert in Abhängigkeit von der Position auf dem Förderband in Querrichtung zu der Bewegungsrichtung 50. Der ebene Abschnitt in der Mitte entspricht dem Förderband 46, während seitlich die Abstandswerte abweichen. Letzteres geschieht im Beispiel der Figur 5 mit einem flacheren Profil als in Figur 4. Messzonen, zu denen der maximale Abstandswert der Hintergrundmessung nicht dem ebenen Förderband 46 entspricht, können somit ausgeschlossen werden. Vorzugsweise wird dabei noch eine Toleranzschwelle berücksichtigt, die von der konkreten Umgebung abhängt und vorzugsweise je Anwendung bestimmt wird.

## Patentansprüche

1. Kamera (10) zur Erfassung von relativ zu der Kamera (10) in einer Bewegungsrichtung (50) bewegten Objekten (48), wobei die Kamera (10) einen Bildsensor (18) zur Aufnahme von Bilddaten der Objekte (48) in einem Kamerasichtfeld (14, 56), einen optoelektronischen Abstandssensor (24) nach dem Prinzip des Lichtlaufzeitverfahrens mit mehreren Messzonen (30a) zur Messung von mehreren Abstandswerten zu den Objekten (48) in einem Abstandsmessungssichtfeld (58), wobei jede Messzone (30a) in der Lage ist, einen Abstandswert zu messen, so dass insgesamt eine lateral ortsaufgelöste Messung mehrerer Abstandswerte erfolgt, die zu einem Höhenprofil zusammengesetzt werden können, sowie eine mit dem Bildsensor (18) und dem Abstandssensor (24) verbundene Steuer- und Auswertungseinheit (38) aufweist,
**dadurch gekennzeichnet,**
**dass** die Steuer- und Auswertungseinheit (38) dafür ausgebildet ist, automatisch durch Auswahl bestimmter Messzonen (30a) anhand eines Objektbereichs einen interessierenden Bereich (60) für den Abstandssensor (24) innerhalb des Abstandsmessungssichtfeldes (58) zu konfigurieren, indem durch Messen von Abstandswerten über eine Konfigurationszeit sowie Auswerten der Abstandswerte und/oder deren Änderung der Objektbereich als derjenige Bereich bestimmt wird, in dem sich Abstandswerte mehr als rauschbedingt verändern und sich folglich Objekte (48) bewegen.

2. Kamera (10) nach Anspruch 1,
wobei der Abstandssensor (24) in die Kamera (10) integriert ist.

3. Kamera (10) nach Anspruch 1 oder 2,
wobei die Messzonen (30a) parallel auslesbar sind.

4. Kamera (10) nach einem der vorhergehenden Ansprüche,
wobei die Steuer-und Auswertungseinheit (38) dafür ausgebildet ist, über eine Variationszeit ein statistisches Maß für Änderungen der Abstandswerte einer jeweiligen Messzone (30a) zu bestimmen, wobei eine Messzone als zum Objektbereich gehörig angesehen wird, wenn in dieser Messzone das statistische Maß über einer Toleranzschwelle liegt.

5. Kamera (10) nach einem der vorhergehenden Ansprüche,
wobei die Steuer- und Auswertungseinheit (38) dafür ausgebildet ist, über eine Hintergrunderfassungszeit jeweils einen Maximalwert der Abstandswerte einer jeweiligen Messzone (30a) zu bestimmen, wobei die derart bestimmten Maximalwerte ein Höhenprofil des Hintergrundes ohne bewegte Objekte ergeben.

6. Kamera (10) nach Anspruch 5,
wobei die Steuer- und Auswertungseinheit (38) dafür ausgebildet ist, den interessierenden Bereich (60) anhand der Maximalwerte und einer Erwartungshaltung an den relevanten Hintergrund als ebenen Untergrund zu verkleinern, indem eine Messzone nicht zum interessierenden Bereich gehört, weil der Maximalwert dieser Messzone nicht zu der Annahme einer flachen Hintergrundgeometrie passt, oder zu vergrößern, indem Messzonen noch einbezogen werden, in denen sich während der Konfigurationszeit kein Objekt bewegt hat, soweit der Maximalwert der erwarteten Hintergrundgeometrie entspricht, wobei insbesondere die Anpassung eine Richtung quer zu der Bewegungsrichtung (50) betrifft.

7. Kamera (10) nach einem der vorhergehenden Ansprüche,
wobei die Steuer- und Auswertungseinheit (38) dafür ausgebildet ist, den interessierenden Bereich (60) längs der Bewegungsrichtung (50) auf einen zu den bewegten Objekten (48) hin gerichteten Eintrittsbereich zu beschränken.

8. Kamera (10) nach einem der vorhergehenden Ansprüche,
wobei der Abstandssensor (24) eine Vielzahl von im Geiger-Modus betreibbaren Lawinenphotodioden (30a) aufweist und die Steuer- und Auswertungseinheit (38) dafür ausgebildet ist, den interessierenden Bereich (60) durch selektive Aktivierung des Geiger-Modus in dem interessierenden Bereich (60) entsprechenden Lawinenphotodioden (30a) einzustellen.

9. Kamera (10) nach einem der vorhergehenden Ansprüche,
wobei das Abstandsmessungssichtfeld (58) über das Kamerasichtfeld (56) hinausragt, insbesondere gegen die Bewegungsrichtung (50).

10. Kamera (10) nach einem der vorhergehenden Ansprüche,
wobei die Steuer- und Auswertungseinheit (38) dafür ausgebildet ist, Codeinhalte von mit den Objekten (48) aufgenommenen Codes (52) auszulesen.

11. Kamera (10) nach einem der vorhergehenden Ansprüche,
die stationär an einer Fördereinrichtung (46) montiert ist, welche die Objekte (48) in Bewegungsrichtung (50) fördert.

12. Verfahren zur Erfassung von in einer Bewegungsrichtung (50) bewegten Objekten (48), wobei von einer Kamera (10) in einem Kamerasichtfeld (56) Bilddaten der Objekte (48) aufgenommen und mit einem optoelektronischen Abstandssensor (24) nach dem Prinzip des Lichtlaufzeitverfahrens mit mehreren Messzonen (30a) in einem Abstandsmessungssichtfeld (58) mehrere I Abstandswerte zu den Objekten (48) gemessen werden, wobei jede Messzone (30a) einen Abstandswert misst, so dass insgesamt eine lateral ortsaufgelöste Messung mehrerer Abstandswerte erfolgt, die zu einem Höhenprofil zusammengesetzt werden können, wobei Bilddaten ausgelesen und Abstandswerte ausgewertet werden,
**dadurch gekennzeichnet,**
**dass** automatisch durch Auswahl bestimmter Messzonen (30a) anhand eines Objektbereichs ein interessierender Bereich (60) für den Abstandssensor (24) innerhalb des Abstandsmessungssichtfeldes (58) konfiguriert wird, indem durch Messen von Abstandswerten über eine Konfigurationszeit sowie Auswerten der Abstandswerte und/oder deren Änderung der Objektbereich als derjenige Bereich bestimmt wird, in dem sich Abstandswerte mehr als rauschbedingt verändern und sich folglich Objekte (48) bewegen.

## Claims

1. A camera (10) for detecting objects (48) moving relative to the camera (10) in a direction of movement (50), the camera (10) comprising an image sensor (18) for recording image data of the objects (48) in a camera field of view (14, 56), an optoelectronic distance sensor (24) according to the principle of the light time-of-flight method having a plurality of measurement zones (30a) for measuring a plurality of distance values to the objects (48) in a distance measurement field of view (58), each measuring zone (30a) being capable of measuring a distance value, so that altogether a laterally spatially resolved measurement of a plurality of distance values takes place, which distance values can be combined to form a height profile, and a control and evaluation unit (38) connected to the image sensor (18) and the distance sensor (24),
**characterized in that** the control and evaluation unit (38) is configured to automatically configure a region of interest (60) for the distance sensor (24) within the distance measurement field of view (58) by selecting specific measurement zones (30a) on the basis of an object region, with the object region being determined, by measuring distance values over a configuration time and evaluating the distance values and/or their change, as the region where distance values change more than due to noise and consequently where objects (48) move.

2. The camera (10) according to claim 1,
wherein the distance sensor (24) is integrated into the camera (10).

3. The camera (10) according to claim 1 or 2,
wherein the measuring zones (30a) can be read out in parallel.

4. The camera (10) according to any of the preceding claims,
wherein the control and evaluation unit (38) is configured to determine, over a variation time, a statistical measure for changes in the distance values of a respective measuring zone (30a), wherein a measuring zone is regarded as belonging to the object area if the statistical measure lies above a tolerance threshold in this measuring zone.

5. The camera (10) according to any of the preceding claims,
wherein the control and evaluation unit (38) is configured to determine a respective maximum value of the distance values of a respective measurement zone (30a) over a background detection time, the maximum values determined in this way resulting in a height profile of the background without moving objects.

6. The camera (10) according to claim 5,
wherein the control and evaluation unit (38) is configured to reduce the region of interest (60) on the basis of the maximum values and an expectation of the relevant background as a flat background, in that a measurement zone does not belong to the region of interest because the maximum value of this measurement zone does not match the assumption of a flat background geometry, or to increase the region of interest (60) by also including measurement zones where no object has moved during the configuration time, as long as the maximum value matches the expected background geometry, wherein in particular the adjustment relates to a direction transverse to the direction of movement (50).

7. The camera (10) according to any of the preceding claims,
wherein the control and evaluation unit (38) is configured to restrict the region of interest (60) along the direction of movement (50) to an entrance region directed towards the moving objects (48).

8. The camera (10) according to any of the preceding claims,
wherein the distance sensor (24) comprises a plurality of avalanche photodiodes (30a) operable in Geiger mode, and the control and evaluation unit (38) is configured to adjust the region of interest (60) by selectively activating the Geiger mode in avalanche photodiodes (30a) corresponding to the region of interest (60).

9. The camera (10) according to any of the preceding claims,
wherein the distance measurement field of view (58) projects beyond the camera field of view (56), in particular in a direction opposite of the direction of movement (50).

10. The camera (10) according to any of the preceding claims,
wherein the control and evaluation unit (38) is configured to read out code contents of codes (52) recorded with the objects (48).

11. The camera (10) according to any of the preceding claims,
that is stationarily mounted on a conveyor device (46) that conveys the objects (48) in the direction of movement (50).

12. A method for detecting objects (48) moving in a direction of movement (50), wherein image data of the objects (48) are recorded by a camera (10) in a camera field of view (56) and a plurality of distance values to the objects (48) are measured with an optoelectronic distance sensor (24) according to the principle of the light time-of-flight method having a plurality of measuring zones (30a) in a distance measuring field of view (58), wherein each measuring zone (30a) measures a distance value, so that altogether a laterally spatially resolved measurement of a plurality of distance values takes place, which can be combined to form a height profile, wherein image data are read out and distance values are evaluated,
**characterized in that** a region of interest (60) for the distance sensor (24) within the distance measurement field of view (58) is automatically configured by selecting specific measurement zones (30a) on the basis of an object region, with the object region being determined, by measuring distance values over a configuration time and evaluating the distance values and/or their change, as the region where distance values change more than due to noise and consequently where objects (48) move.

## Revendications

1. Caméra (10) pour détecter des objets (48) se déplaçant par rapport à la caméra (10) dans une direction de mouvement (50), la caméra (10) comprenant un capteur d'image (18) pour enregistrer des données d'image des objets (48) dans un champ de vision de la caméra (14, 56), un capteur de distance optoélectronique (24) selon le principe du procédé de temps de vol de la lumière ayant une pluralité de zones de mesure (30a) pour mesurer une pluralité de valeurs de distance aux objets (48) dans un champ de vision de mesure de distance (58), chaque zone de mesure (30a) étant capable de mesurer une valeur de distance, de sorte qu'il se produit au total une mesure à résolution spatiale latérale de plusieurs valeurs de distance, qui peuvent être combinées pour former un profil de hauteur, et une unité de commande et d'évaluation (38) reliée au capteur d'image (18) et au capteur de distance (24),
**caractérisé en ce que** l'unité de commande et d'évaluation (38) est configurée pour configurer automatiquement une zone d'intérêt (60) pour le capteur de distance (24) à l'intérieur du champ de vision de mesure de distance (58) en sélectionnant des zones de mesure spécifiques (30a) sur la base d'une zone d'objet, en déterminant la zone d'objet comme la zone dans laquelle les valeurs de distance varient plus que par le bruit et donc dans laquelle des objets (48) se déplacent, et la détermination est effectuée par la mesure de valeurs de distance pendant un temps de configuration et l'évaluation des valeurs de distance et/ou de leur modification.

2. Caméra (10) selon la revendication 1,
dans laquelle le capteur de distance (24) est intégré à la caméra (10).

3. Caméra (10) selon la revendication 1 ou 2,
dans laquelle les zones de mesure (30a) peuvent être lues en parallèle.

4. Caméra (10) selon l'une des revendications précédentes,
dans laquelle l'unité de commande et d'évaluation (38) est configurée pour déterminer, sur une durée de variation, une mesure statistique pour des modifications des valeurs de distance d'une zone de mesure respective (30a), une zone de mesure étant considérée comme appartenant à la zone d'objet si la mesure statistique se situe au-dessus d'un seuil de tolérance dans cette zone de mesure.

5. Caméra (10) selon l'une des revendications précédentes,
dans laquelle l'unité de commande et d'évaluation (38) est configurée pour déterminer une valeur maximale respective des valeurs de distance d'une zone de mesure respective (30a) sur un temps de détection de l'arrière-plan, les valeurs maximales ainsi déterminées donnant un profil de hauteur de l'arrière-plan sans objets mobiles.

6. Caméra (10) selon la revendication 5,
dans laquelle l'unité de commande et d'évaluation (38) est configurée pour réduire la zone d'intérêt (60) sur la base des valeurs maximales et d'une attente de l'arrière-plan pertinent comme arrière-plan plat, en ce qu'une zone de mesure n'appartient pas à la zone d'intérêt parce que la valeur maximale de cette zone de mesure ne correspond pas à l'hypothèse d'une géométrie d'arrière-plan plate, ou d'augmenter la région d'intérêt (60) en incluant également des zones de mesure où aucun objet ne s'est déplacé pendant le temps de configuration, tant que la valeur maximale correspond à la géométrie d'arrière-plan attendue, dans lequel en particulier l'ajustement se rapporte à une direction transversale à la direction du mouvement (50).

7. Caméra (10) selon l'une des revendications précédentes,
dans laquelle l'unité de commande et d'évaluation (38) est configurée pour restreindre la région d'intérêt (60) le long de la direction de mouvement (50) à une région d'entrée dirigée vers les objets mobiles (48).

8. Caméra (10) selon l'une des revendications précédentes,
dans laquelle le capteur de distance (24) comprend une pluralité de photodiodes à avalanche (30a) pouvant fonctionner en mode Geiger, et l'unité de commande et d'évaluation (38) est configurée pour ajuster la zone d'intérêt (60) en activant sélectivement le mode Geiger dans les photodiodes à avalanche (30a) correspondant à la zone d'intérêt (60).

9. Caméra (10) selon l'une des revendications précédentes,
dans laquelle le champ de vision de mesure de distance (58) dépasse le champ de vision de la caméra (56), notamment dans une direction opposée à la direction de déplacement (50).

10. Caméra (10) selon l'une des revendications précédentes,
dans laquelle l'unité de commande et d'évaluation (38) est configurée pour lire le contenu des codes (52) enregistrés avec les objets (48).

11. Caméra (10) selon l'une des revendications précédentes,
qui est montée de manière stationnaire sur un dispositif de transport (46) qui transporte les objets (48) dans la direction du mouvement (50).

12. Procédé de détection d'objets (48) se déplaçant dans une direction de déplacement (50), dans lequel des données d'image des objets (48) sont enregistrées par une caméra (10) dans un champ de vision de caméra (56) et une pluralité de valeurs de distance aux objets (48) sont mesurées avec un capteur de distance optoélectronique (24) selon le principe du procédé de temps de vol de la lumière ayant une pluralité de zones de mesure (30a) dans un champ de vision de mesure de distance (58), dans lequel chaque zone de mesure (30a) mesure une valeur de distance, de sorte qu'il se produit au total une mesure à résolution spatiale latérale de plusieurs valeurs de distance, qui peuvent être combinées pour former un profil de hauteur, des données d'image étant lues et des valeurs de distance étant évaluées,
**caractérisé en ce qu'**une zone d'intérêt (60) pour le capteur de distance (24) à l'intérieur du champ de vision de mesure de distance (58) est configurée automatiquement en sélectionnant des zones de mesure spécifiques (30a) sur la base d'une zone d'objet, en déterminant la zone d'objet comme la zone dans laquelle les valeurs de distance varient plus que par le bruit et donc dans laquelle des objets (48) se déplacent, et la détermination est effectuée par la mesure de valeurs de distance pendant un temps de configuration et l'évaluation des valeurs de distance et/ou de leur modification.
